(19) Europäisches Patentamt European Patent Office Office européen des brevets

(11) **EP 4 595 743 B1**

(12) **EUROPEAN PATENT SPECIFICATION**

(45) Date of publication and mention
of the grant of the patent:
**20.05.2026 Bulletin 2026/21**

(21) Application number: **25154754.3**

(22) Date of filing: **29.01.2025**

(51) International Patent Classification (IPC):
***A01K 1/015*** (2006.01)    ***C05F 11/00*** (2006.01)

(52) Cooperative Patent Classification (CPC):
**A01K 1/0155; A01K 1/0152; C05F 5/002;
C05G 5/12**

(54) **ABSORBENT COMPOSITION FOR LITTER**

**ABSORBIERENDE ZUSAMMENSETZUNG FÜR EINSTREU**

**COMPOSITION ABSORBANTE POUR LITIÈRE**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **31.01.2024 IT 202400001881**

(43) Date of publication of application:
**06.08.2025 Bulletin 2025/32**

(73) Proprietors:
• **Laviosa Spa
57123 Livorno (IT)**
• **Consorzi Agrari d'Italia - Società per Azioni
(anche in breve C.A.I. S.p.A.)
00187 Roma (IT)**

(72) Inventors:
• **Menicagli, Elena
57016 Rosignano Solvay (Livorno) (IT)**
• **Di Pede, Margherita
56023 Cascina (Pisa) (IT)**
• **Raspanti, Massimo
57127 Livorno (IT)**
• **Iselle, Mauro
36040 Orgiano (Vicenza) (IT)**
• **Panza, Onelio
41038 San Felice sul Panaro MO (IT)**
• **Cremonini, Ivan
40017 San Giovanni in Persiceto (Bologna) (IT)**

(74) Representative: **Santoro, Sofia et al
Società Italiana Brevetti S.p.A.
Via Giosuè Carducci, 8
20123 Milano (IT)**

(56) References cited:
US-A- 4 727 824    US-A1- 2015 250 133
US-A1- 2018 263 210    US-A1- 2019 373 847

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Field of invention

The present invention relates generally to the field of adsorbent materials and, more specifically, relates to a plant-based composition, for example, useful in the preparation of cat litters. The invention further relates to a litter or litter additive comprising said plant-based composition as well as to a method for its preparation. The invention also relates to various uses and applications of the composition.

State of the art

In animal husbandry, bedding is generally used to cover the bottom of stables and cages so as to absorb animal droppings. Fibrous organic materials, such as straw, hemp and wood shavings as well as mineral materials such as bentonite, perlite, *etc.,* are traditionally used to prepare bedding.

The materials selected for making bedding play a key role on the performance of the final product, for example, in terms of animal manure absorption capacity, odor control or reduction, dust formation, agglomerating power, density, *etc.*

The length of time before the litter needs to be renewed is also an important factor in evaluating an adsorbent litter composition because it determines a significant benefit to the end user. Other criteria for evaluating a litter are, for example, the ability to form a stable, non-slip surface that will stay dry for a long time so that animals can walk or rest on it without difficulty and the ability to control or retard rot, mold growth, and/or colonization by pathogens.

To the best of the inventors' knowledge, the types of bedding and bedding additives on the market do not meet these requirements acceptably.

For example, most of the known bedding adsorbent compositions are based on mineral materials such as clay, bentonite, or perlite. Despite their good agglomerating power, bedding based on bentonite or other minerals have rather high density, thus making the product bags unwieldy, and they are not recyclable.

To address this problem, plant-based bedding has been proposed in the art for instance those disclosed in U.S. patent application US2015/250133 A1 and US2019/373847 A1. For example, bedding made from cereal grains or cereal meal has been proposed. However, even this solution is not satisfactory, for example, because valuable raw materials for animal or human food are used, it is not an environmentally sustainable solution.

Therefore, the need is still felt for an adsorbent composition for bedding that is environmentally sustainable, especially recyclable, but also technically performing, especially having high adsorbent power, low density, low dustiness, high durability and possibly also high agglomerating power and high odor control capacity.

Summary of the invention

Therefore, the main purpose of the invention is to make available adsorbent composition based on plant waste that is recyclable or otherwise easily disposable and/or reusable while at the same time overcoming the technical drawbacks of those already described in the art.

After extensive experimentation, the inventors of the present invention have developed an adsorbent composition based on vegetable waste, particularly spelt husk, oat husk, corn husk, soybean straw and husks, useful in the preparation of litter, particularly cat litter, and have also developed a method for its preparation.

In fact, to the best of the inventors' knowledge, it appears that adsorbent compositions, particularly in the form of bedding or bedding additives, based on waste or by-products of cereals or vegetable processing in general are almost completely absent from the market.

It therefore represents an object of the invention a composition based on plant waste as defined in the first of the claims appended hereto.

Further objects of the invention are a method for the preparation of said adsorbent composition and the adsorbent composition obtainable by said method as well as an animal bedding comprising said adsorbent composition whose essential characteristics are as defined in the respective independent claims appended hereto.

Still a further object of the invention is the use of said adsorbent composition for the preparation of animal bedding or as an additive for the preparation thereof, as well as for use as a fertilizer.

Thanks to the special mixture of plant derivatives or plant wastes selected, it was possible to develop an adsorbent composition having high absorption capacity of animal manure, characterized by low dust formation, capable of efficient and prolonged odor control, with high agglomerating power and having low density, a factor that facilitates the handling of the product.

Other important features and advantages of the adsorbent composition of the invention, its use in the preparation of animal bedding, and the method for its preparation are defined in the dependent claims and illustrated in the following detailed description.

Brief description of the figures

Figure 1: Histogram related to the performance of different plant raw materials (left to right spelt husk, oat husk, rice husk).

Figure 2: Histogram related to the performance of compositions based on plant waste (from left to right: comparison sample A, comparison sample B, composition according to an embodiment of the invention).

Glossary

In the context of this description, the term *"chaff"* (or *"husk"*) refers to the waste product obtained from the grain threshing waste consisting of the bracts (glumes and glumettes) that envelop the grain of cereals (e.g., wheat, rye, rice, oats, *etc.*).

In the context of the present invention, the term *"soybean hulls"* or *"soybean husks"* means the waste product obtained from the hulling of soybeans.

The term *"percentage by weight"* or the notation "%*p*" in the context of the present invention, refers to the weight of a component of a mixture or composition relative to the total weight of the mixture or composition. Unless otherwise specified, the notation "%" indicates the percentage by weight.

Detailed description of the invention

As anticipated above, after extensive experimentation, the inventors succeeded in developing a plant waste-based composition having adsorptive properties that is particularly suitable for the preparation of animal litter, especially for cats.

Therefore, it is an object of the invention to provide a composition comprising, or consisting substantially of, a vegetable waste mixture in which said vegetable waste mixture includes spelt husk, oat husk, corn husk, straw and/or soybean husks.

The plant wastes mentioned here can be obtained as generally known to a person skilled in the art, for example:

- soybean hulls: The soybeans pass inside a roaster at a temperature of about 140 degrees. Next, the roasted soybeans pass inside a lined mill that crushes the grain, and by suction soybean husks are taken out and stored.
- corn husk: The corn passes into a cleaner with two separation planes consisting of 8-mm-gauge screens on the upper deck and 2.5-mm-gauge screens on the lower deck. By suction, all the waste is collected in a hopper and stored.
- Oat husk: the oats are sorted through a *tarara* with three planes of separation. The first deck with 8-mm diameter screens the second deck with 3.5-mm gauge slot screens and the third deck with 1.4.mm slot screens Next the oats go through 11- and 5-mm honeycombed cylinders to remove long body that is not oats and vetch that is a weed. The next step is a peeler that removes the soil and stones then the oats go into a densimeter that separates the shrunken grains from the larger ones. At this point the oats are dehulled to separate the husk from the grain by a spiral machine where the tossed grain undergoes an impact detaching the husk from the grain. It then passes into the fan that separates the husk that has detached from the grain and brings it to the storage silo.
- Spelt husk: Spelt is sorted through a *tarara* with three separation planes. The first with 8-mm diameter screens the second with 3.5-mm slot screens and the third with 1.8-mm slot screens. Next, the spelt passes through 11-mm and 5-mm honeycomb cylinders to remove long body that is not spelt and vetch that is a weed. The next step is a peeler that removes the soil and stones then the spelt goes through a densimeter that separates the shrunken grains from the larger grains. At this point, the spelt is dehulled to separate the chaff from the grain by a worm machine with a mechanical brake and then goes into the fan that separates the chaff that has detached from the grain and takes it to the storage silos.

As will be evident from the experimental section below, the amounts of each ingredient in the plant waste mixture can positively or negatively influence the performance of the final composition. In other words, although the identified plant wastes taken in combination with each other are already sufficient for the creation of an adsorbent and/or agglomerating composition suitable for litter, adjusting the proportions can achieve optimal performance.

This is because each component has a specific effect or function, for example, straw and corn the absorbing power, spelt and oats the lightness, soybean the right amount of oil.

For example, the composition according to any of the embodiments described herein may include:

- Spelt husk in amounts between 22 and 42 %,

- Oat husk in amounts between 22 and 42 %,
- Corn husk between 0.5 and 20.5 %,
- straw in the amount of 1 to 15 %,
- Soybean hulls in an amount between 10 and 30 %

by weight on the total weight of the plant waste mixture.

According to a preferred embodiment of the invention, the composition comprises 32 % spelt husk, 32 % oat husk, 10.5 % corn husk, 5.5 % straw, and 20 % soybean hulls by weight of the total weight of the vegetable waste mixture.

The composition of the invention may further comprise one or more agglomerating agents. Said one or more agglomerating agents may be chosen from those generally known to a person skilled in the art. By way of example, but not limitation, said agglomerating agents may be chosen from guar gum, modified starch, carob gum, tara gum, xanthan gum, gellan gum, karaya gum, alginate, agar, carrageenan, gum arabic, pectin, tragacanth, cellulose ether, and mixtures thereof.

Preferably the agglomerating agent is guar gum.

Where present, the agglomerating agent or mixture of agglomerating agents is present in an amount between 5 and 15 % by weight of the total weight of the composition. Preferably, the agglomerating agent or mixture of agglomerating agents is present in an amount of 8 % by weight relative to the total weight of the composition.

The adsorbent and/or agglomerating composition of the invention may further comprise one or more anti-odor agents. Said one or more anti-odor agents may be chosen from those generally known to a person skilled in the art to be suitable. Preferably, the anti-odor agent is citric acid.

Where present, the anti-odor agent or mixture of anti-odor agents is present in an amount between 1 and 5 % by weight of the total weight of the composition. Preferably, the anti-odor agent or mixture of anti-odor agents is present in an amount of 2 % by weight relative to the total weight of the composition.

Therefore, according to a preferred embodiment of the invention, the adsorbent composition of the invention includes, or consists of: spelt husk, oat husk, corn husk, straw, soybean hulls, and preferably also guar gum and citric acid.

According to a particularly preferred embodiment of the invention, the composition includes 28.8% spelt husk, 28.8% oat husk, 9.45% corn husk, 4.95% straw (e.g., in the form of straw pellets), 18% soybean hulls, 8% guar gum, and 2% citric acid by weight of the total weight of the composition.

The composition according to any of the embodiments described here includes about 24% q.t. of starch as measured by polarimetric method.

The composition according to any of the forms of realization described here has a dustiness of 4% or less, as measured by the method given in the experimental section below.

The composition according to any of the forms of realization described here has a bulk density of 450 g/L or less, as measured by the method given in the experimental section below.

It should also be noted that during the experimental phase leading to the selection of the above-mentioned plant materials, it was found that some components may adversely affect the product performance.

Therefore, the adsorbent composition according to any of the forms of realization described here preferably does not include one or more (two, three, four, five, six, seven, eight...all) of the following: clay, bentonite, perlite, slaked lime, grains or cereal grains or cereal flour, lignin, wood chips or wood in general, herbs, alfalfa (alpha alpha), sunflower seed husk, miscanthus, napier grass or switchgrass, cedar, pine, tutulus (the part of the corn ear where the caryopses are attached), palm oil, dyes in general, polymeric materials in general, chlorous acid salts, calcium sulfate, zinc aluminosilicate, *etc.*

As anticipated, the inventors of the present invention have also developed a method for preparing the absorbent composition described herein that is easy to implement, inexpensive and reproducible.

According to the method of the invention, the vegetable waste mixture described above is ground according to techniques known in the art. The grinding is protracted for as long as necessary to obtain a powder, such as for a time of about 3 minutes.

Advantageously, the plant waste mixture can be pre-treated with carbon dioxide to eliminate any (insect) pests. When provided, the pulverized plant waste mixture is mixed together with the one or more agglomerating agent (e.g., guar gum) and the one or more anti-odor agent (e.g., citric acid).

The pulverized mixture, and admixed with the appropriate excipients if provided, is sent to a dicer, which with the aid of steam, particularly 50 to 60 %, pelletizes it. The pellets thus obtained generally have a temperature of 80-85°C. The pellets are then screened, for example by employing a 3-mm screen. Any product left on the screen is sent to an air cooler and then fed back into the process. The mixture can be screened again and is finally bagged.

Therefore, the present invention also relates to a method for the preparation of an adsorbent composition comprising the following steps:

- Mix together spelt husk, oat husk, corn husk, straw and soybean hulls;

- Grind the mixture obtained from the previous step;
- Optionally add one or more agglomerating agents and/or one or more anti-odor agents;
- Process the mixture by means of a dicing machine so as to obtain pellets;
- Screen the resulting pellets.

The method may involve the step of adding water, preferably in the form of steam (more preferably at 50-60% saturation) before pelletizing.

Thus, the composition of the invention can be in the form of pellets of varying sizes, for example, from pellets 1-5 mm in length to pellets 10-30 mm in length.

The present invention also relates to compositions obtained or obtainable by the method of any of the embodiments described herein.

As anticipated, the plant waste composition of the present invention was found to be suitable for making animal litter, particularly cat litter.

Therefore, the present invention also relates to a litter that includes, or consists of, the composition according to any of the embodiments described herein as well as to a litter additive that includes, or consists of, the composition according to any of the embodiments described herein.

Litter made from the invention's adsorptive composition can effectively absorb animal droppings, particularly urine, while counteracting the emission of foul odors. The litter has the added advantage of promoting the formation of agglomerates that are easily removable, thus preventing widespread contamination of the litter and facilitating its cleaning.

As will also be evident from the experimental section that follows, the litter of the invention is characterized by low dustiness, a very important factor for users handling the product, particularly when transferring from the bag to the tray such as to limit the dispersion and deposition of dust outside the tray, as well as for the animals using it. The bedding of the invention is also characterized by low density such as to facilitate the handling of bags of product.

One of the additional advantages of the invention, especially compared to mineral-based litter, is that it is a biodegradable composition therefore easy to dispose of and with minimal environmental impact. In fact, since it is a biodegradable composition, the litter of the invention after use can also be used as a fertilizer.

The present invention therefore also relates to the use of the composition according to any of the embodiments described herein for the preparation of animal bedding, preferably cat litter, as well as a fertilizer.

The following experimental section aims to illustrate some of the possible forms of realization of the invention described here.

EXAMPLES

The following examples are given only for illustrative purposes and not limiting of the present invention. It is understood that modifications obvious to one skilled in the art are included in the scope of the appended claims.

**Experimental tests carried out**

Initially, a waste mixture was identified that would achieve good density (reference value: < 450 g/L) and low dustiness (dust is considered to be the percentage by weight of material with a grain size of less than 1 mm).

TEST NO. 1

The first composition tested included the following:

- Vegetable waste mixture:

  - 30% spelt husk
  - 30% oat husk
  - 20% straw pellets
  - 10% corn husk
  - 10% soybean hulls

The vegetable waste mixture was pelletized using about 4 % water added in the form of steam (50-60 % saturation) - by weight relative to the weight of the total dry composition.

However, the final product had a too high density than desired (540 g/L vs. 450 g/L) and contained too much dust (17%) possibly due to the straw and corn husk.

TEST NO. 2

The second composition tested included the following composition:

- Vegetable waste mixture:

  - 28% spelt husk
  - 28% oat husk
  - 6% straw pellets
  - 18% corn husk
  - 20% soybean hulls

The plant waste mixture was pelletized using about 5 % water - added as steam (50-60 % saturation) - by weight compared to the weight of the total dry composition. The dustiness of this composition is reduced (4%) but the density still remains too high (490 g/L vs 450 g/L).

TEST NO. 3

In a further test, straw was totally removed from the adsorbent composition, i.e.:

- Vegetable waste mixture:

  - 28% spelt husk
  - 28% oat husk
  - 28% corn husk
  - 16% soybean hulls

The plant waste mixture was pelletized using about 5 % water - added as steam (50-60 % saturation) - by weight compared to the weight of the total dry composition. However, an increase in density was noted (540 g/L vs. 450 g/L) and also in dustiness, which rose to 6 %.

TEST NO. 4

The composition that ensured that a density of less than 450 g/L and a dustiness of less than 3 % was obtained was as follows:

- Vegetable waste mixture:

  - 32% spelt husk
  - 32% oat husk
  - 5.5% straw pellets
  - 10.5% corn husk
  - 20% soybean hulls

The vegetable waste mixture was pelletized using about 7 % water - addition in the form of steam (50-60 % saturation) - by weight relative to the weight of the total dry composition.

TEST No. 5: Addition of an agglomerating additive.

To obtain good agglomerating power, further tests were carried out using guar gum percentages of 6% and 8% by weight relative to the total weight of the dry composition. Better agglomeration was obtained with the higher percentage.

PROOF No. 6: Addition of an anti-odor additive.

As an anti-odor additive, citric acid provided the best results. Tests were conducted by adding different amounts of citric acid, specifically 1% and 2% by weight relative to the total weight of the dry composition, to the composition of TEST No. 4 to test its ability to neutralize odors. The best results were obtained with the higher amount.

TEST NO. 7: Self-agglomerating and anti-odor adsorbent composition.

The self-agglomerating, anti-odor adsorbent composition according to a preferred embodiment of the invention comprises:

- Vegetable waste mixture:

  - 32% spelt husk
  - 32% oat husk
  - 5.5% straw pellets
  - 10.5% corn husk
  - 20% soybean hulls

- 8% guar gum by weight relative to the weight of the total composition
- 2% citric acid by weight to weight of total composition

In addition, water in the form of vapor is added at 50-60% saturation, in amounts equal to 7% of the total dry composition, which includes the plant waste mixture, guar gum, and citric acid.

**Characterization of the composition of the invention and comparison with commercially available compositions**

The adsorbent composition of TEST No. 7 was subjected to a quality assessment, specifically aimed at verifying whether the composition was suitable for use as animal bedding.

The properties investigated included, among others, density, *clumping* strength i.e., the compactness of the agglomerate (or ball) that is obtained by reaction of the litter with the droppings, ammonia release indicative of the ability of the adsorbent composition to control odors, the so-called *westinghouse* i.e., the ability to adsorb water, and the weight of each agglomerate (or ball) an indirect index of the durability of a bag of litter in that the greater the weight of the ball, the greater the amount of litter that has been removed during cleaning and thus the greater the amount of material that must be re-added to the tray each time. A brief description of the method used to determine or measure each of these properties is provided below.

*Density:*

Bulk density is determined as follows.

Litter is poured into a 500 mL beaker (V) of known volume and weight ($M_0$) to occupy the entire available volume. So, the beaker containing the litter is weighed ($M_1$). The bulk density is determined by the following equation:

$$\frac{M_1 - M_0}{V}$$

Where:

$M_0$ is the weight of the glass, expressed in grams
$M_1$ is the weight of the glass filled with litter, expressed in grams
V is the volume of the glass, equal to 500 mL
The result is expressed in g/L.

*Clumping force (%):*

Clumping is determined as follows.

A bedding layer of about 6-7 cm is placed inside a tray. Using a graduated cylinder, 20 mL of water is poured into a spot in the litter from a height of about 2 cm. After 30 minutes, the agglomerated part, also called the ball, is taken out, assessing the firmness. If the ball does not break into pieces, it is weighed ($M_0$) and then dropped from a height of about 80 cm. So, the ball is weighed again or-if it breaks into pieces after falling-the visibly largest piece is weighed ($M_1$). The clumping force is expressed as:

$$\frac{M_1}{M_0} \cdot 100$$

Where:

M₀ is the weight of the ball before the fall, expressed in grams
M₁ is the weight of the ball after the fall, expressed in grams
The result is expressed as a percentage.

*Ammonia release (ppm):*

Ammonia release is determined as follows.

About 20 g of litter is spread on a tray about 10 cm in diameter. On the surface of the litter, 5 mL of a 1% ammonia solution by weight is evenly distributed. After 30 minutes, the tray is covered with a funnel into which the Drager equipped with an ammonia determination vial has been inserted, taking care not to leave any gaps that could allow ammonia to escape. After waiting 60 seconds, 10 samples are taken with the Drager so as to obtain an appreciable reading on the graduated scale of the vial. The result of the ammonia release measurement equals the number read on the vial after the samplings and is expressed in ppm.

*Westinghose (%):*

Water absorption by litter, also called *westinghouse,* is determined as follows.

Approximately 20 g of litter ($M_0$) is poured inside a cone consisting of 355 μm stainless steel mesh, with dimensions of 100 mm in diameter and 105 mm in height and with known weight ($M_1$). The cone is completely immersed in demineralized water for 20 minutes. So, the cone is taken out of the water and allowed to drain for about 30 minutes. Finally, the system consisting of the cone and the wet litter is weighed ($M_2$). The *westinghouse* is calculated as follows:

$$\frac{M_2 - M_1 - M_0}{M_0} \cdot 100$$

Where:

M₀ is the initial weight of the litter, expressed in grams
M₁ is the weight of the cone, expressed in grams
M₂ is the weight of the cone and water-saturated litter, expressed in grams
The result is expressed as a percentage.

Table 1 below shows the values obtained for the composition according to an embodiment of the invention (TEST NO. 7).

TABLE 1

| Properties | Litter based on vegetable waste of the invention |
|---|---|
| Density (g/L) | 430 |
| Clumping force (%)[a] | 92 |
| Ammonia release (ppm) | 5 |
| *Westinghouse* (%)[b] | 510 |
| Ball weight (g) | 45 |

[a] *Clumping* force means the compactness of the ball
[b] water absorption

These properties can be compared with those of some plant litter currently on the market.

Specifically, to demonstrate that litter consisting mainly of cereal grains or cereal meal generally has a rather high density as well as poor agglomerating power, the present vegetable waste litter was compared with two commercial litter consisting mainly of corn or its derivatives. The first comparison litter consisted of 100 % whole corn kernels also containing corn starch as a thickener and corn oil as a lubricant (sample A); the second comparison litter consisted mainly of corn and also containing residues from grain processing (sample B).

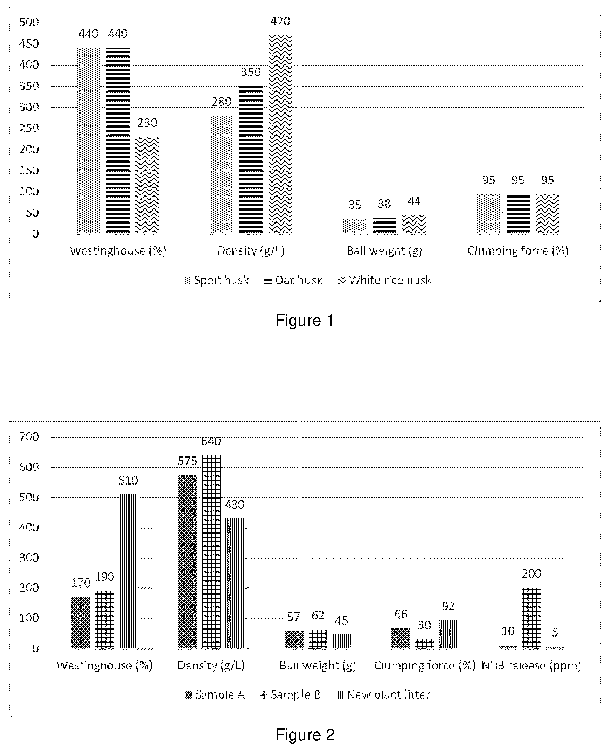

As can be seen from the histogram in Figure 2, the two comparison samples A and B have a much lower *westinghouse,* higher density, and poor agglomerating power *(clumping)* compared to the plant waste composition according to an embodiment of the invention. In addition, the comparison litters also show higher values of odor release ($NH_3$ release), confirming that the addition of citric acid provides better odor control.

The plant waste-based litter of the invention was also compared with two litters in which the main ingredient is wood, specifically to show how wood-based litters have a lower *clumping* strength than the new plant waste-based litter. The former consists entirely of wood fibers and also contains a natural thickening agent such as cellulose, starch derivatives, or natural gums (sample C); the latter also consists exclusively of natural wood fibers and also contains a natural binder (sample D).

TABLE 2

| Litterbox | *Clumping* force (%) |
|---|---|
| Vegetable waste bedding of the invention | 92 |
| Sample C | 10 |
| Sample D | 70 |

As can be seen from TABLE 2, beddings in which the main ingredient is a wood derivative shows low agglomerating power.

Another comparison was made with a litter consisting solely of grain milling by-products in which an agglomerating agent and a mineral salt were added for odor control (sample E).

As can be seen from the data shown in TABLE 3, sample E shows a very low *westinghouse* but also a fairly high ammonia release, despite the addition of a mineral salt for odor control in the formulation, compared to the new vegetable waste litter. So, the mixture of plant wastes chosen for the litter of the invention allows for a high degree of absorption and also the addition of citric acid causes odors to be largely neutralized.

TABLE 3

| Litterbox | *Westinghouse (%)* | Ammonia release (ppm) |
|---|---|---|
| Composition (bedding) according to an embodiment of the invention | 510 | 5 |
| Sample E | 240 | 50 |

From the comparison, it is evident that the composition of the invention has improved characteristics compared to the already known products, in particular, it has higher absorbing power, excellent odor-retention capacity, is lightweight and therefore easier to handle by the user, and has a longer shelf life, helping to extend the life of the product before its disposal.

**Comparison of raw materials**

As part of the experiments carried out to arrive at the claimed invention, various plant wastes were studied that could be used to prepare adsorbent and possibly also agglomerating compositions particularly suitable as bedding.

The plant wastes selected and studied were: spelt husk, oat husk, and white rice husk. Each raw material was mixed with 8 % guar gum relative to the initial weight of raw material, to give the agglomerating effect, and 30 % water, in order to proceed with pelletizing.

The results of the performance of the resulting litters are shown in Figure 1.

The histogram shows that, as far as *westinghouse* is concerned, white rice husk-based litter has a value of about half that of oat husk and spelt husk-based litter. In terms of density, white rice husk-based litter showed the highest value of 470 g/L. In contrast, the *clumping* strength of the different litters appears to be similar. Due to low water absorption *(westinghouse)* and higher density than oat and spelt husk-based bedding, the white rice husk raw material was discarded for further testing.

In other words, this trial showed that the selection of raw materials - i.e., specific plant wastes - plays an important role on the performance of the final adsorbent or bedding composition.

**Claims**

1. Composition comprising a mixture of vegetable waste wherein said mixture of vegetable waste comprises spelt husk between 22 and 42 %, oat husk between 22 and 42 %, corn husk between 0.5 and 20.5 %, straw between 1 and 15 %, and soybean husks between 10 and 30 % by weight of the total weight of the vegetable waste mixture.

2. Composition according to claim 1 further comprising one or more agglomerating agent(s) and/or one or more anti-odor agent(s).

3. Composition according to claim 2 wherein said agglomerating agents are selected from: guar gum, modified starch, carob gum, tara gum, xanthan gum, gellan gum, karaya gum, alginate, agar, carrageenan, gum arabic, pectin, tragacanth, cellulose ether, and mixtures thereof, preferably wherein the agglomerating agent is guar gum.

4. Composition according to claim 2 or 3 wherein the anti-odor agent is citric acid.

5. Composition according to any one of claims 1 to 4 wherein the vegetable waste mixture comprises 32% spelt husk, 32% oat husk, 10.5% corn husk, 5.5% straw, and 20% soybean husks by weight of the total weight of the vegetable waste mixture.

6. Composition according to any of claims 2 to 5, wherein the one or more agglomerating agent(s) are present between 5 and 15 wt% and/or the one or more anti-odor agent(s) are present between 1 and 5 wt% of the total weight of the composition.

7. Composition according to claim 6 comprising 8% guar gum and 2% citric acid by weight of the total weight of the composition.

8. Additive for bedding or bedding for animals, preferably for cats, comprising the composition according to any of the preceding claims.

9. Use of the composition according to any one of claims 1 to 7 for the preparation of animal bedding, preferably cat litter and/or as fertiliser.

**Patentansprüche**

1. Zusammensetzung, umfassend eine Mischung aus pflanzlichem Abfall, wobei die Mischung aus pflanzlichem Abfall Dinkelspelz zwischen 22 und 42 Gew.-%, Haferspelz zwischen 22 und 42 Gew.-%, Maisspelz zwischen 0,5 und 20,5 Gew.-%, Stroh zwischen 1 und 15 Gew.-% und Sojabohnenspelz zwischen 10 und 30 Gew.-% des Gesamtgewichts der pflanzlichen Abfallmischung umfasst.

2. Zusammensetzung nach Anspruch 1, ferner umfassend ein oder mehrere Agglomerierungsmittel und/oder ein oder mehrere Geruchshemmungsmittel.

3. Zusammensetzung nach Anspruch 2, wobei die Agglomerierungsmittel ausgewählt sind aus: Guarkernmehl, modifizierter Stärke, Johanniskbrotkernmehl, Tarakernmehl, Xanthan, Gellangummi, Karayagummi, Alginat, Agar, Carrageen, Gummi arabicum, Pektin, Tragant, Celluloseether und Mischungen davon, vorzugsweise wobei das Agglomerierungsmittel Guarkernmehl ist.

4. Zusammensetzung nach Anspruch 2 oder 3, wobei das Geruchshemmungsmittel Zitronensäure ist.

5. Zusammensetzung nach einem der Ansprüche 1 bis 4, wobei die pflanzliche Abfallmischung zu 32 Gew.-% Dinkelspelz, 32 Gew.-% Haferspelz, 10,5 Gew.-% Maisspelz, 5,5 Gew.-% Stroh und 20 Gew.-% Sojabohnenspelz des Gesamtgewichts der pflanzlichen Abfallmischung umfasst.

6. Zusammensetzung nach einem der Ansprüche 2 bis 5, wobei das eine oder die mehreren Agglomerierungsmittel zwischen 5 und 15 Gew.-% vorliegen und/oder das eine oder die mehreren Geruchshemmungsmittel zwischen 1 und 5 Gew.-% des Gesamtgewichts der Zusammensetzung vorliegen.

**7.** Zusammensetzung nach Anspruch 6, umfassend zu 8 Gew.-% Guarkernmehl und 2 Gew.-% Zitronensäure des Gesamtgewichts der Zusammensetzung.

**8.** Zusatzstoff für Einstreu oder Einstreu für Tiere, vorzugsweise für Katzen, umfassend die Zusammensetzung nach einem der vorstehenden Ansprüche.

**9.** Verwendung der Zusammensetzung nach einem der Ansprüche 1 bis 7 für die Herstellung von Einstreu für Tiere, vorzugsweise Katzenstreu und/oder als Düngemittel.

**Revendications**

**1.** Composition comprenant un mélange de déchets végétaux, dans laquelle ledit mélange de déchets végétaux comprend des enveloppes d'épeautre entre 22 et 42 %, des enveloppes d'avoine entre 22 et 42 %, des enveloppes de maïs entre 0,5 et 20,5 %, de la paille entre 1 et 15 %, et des enveloppes de soja entre 10 et 30 % en poids du poids total du mélange de déchets végétaux.

**2.** Composition selon la revendication 1, comprenant en outre un ou plusieurs agents agglomérants et/ou un ou plusieurs agents antiodeur.

**3.** Composition selon la revendication 2, dans laquelle lesdits agents agglomérants sont choisis parmi : gomme de guar, amidon modifié, gomme de caroube, gomme de tara, gomme de xanthane, gomme gellane, gomme karaya, alginate, agar-agar, carraghénane, gomme arabique, pectine, adragante, éther de cellulose, et mélanges de ceux-ci, de préférence dans laquelle l'agent agglomérant est la gomme de guar.

**4.** Composition selon la revendication 2 ou 3, dans laquelle l'agent anti-odeur est l'acide citrique.

**5.** Composition selon l'une quelconque des revendications 1 à 4, dans laquelle le mélange de déchets végétaux comprend 32 % d'enveloppes d'épeautre, 32 % d'enveloppes d'avoine, 10,5 % d'enveloppes de maïs, 5,5 % de paille, et 20 % d'enveloppes de soja en poids du poids total du mélange de déchets végétaux.

**6.** Composition selon l'une quelconque des revendications 2 à 5, dans laquelle le ou les agents agglomérants sont présents entre 5 et 15 % en poids et/ou le ou les agents anti-odeur sont présents entre 1 et 5 % en poids du poids total de la composition.

**7.** Composition selon la revendication 6, comprenant 8 % de gomme de guar et 2 % d'acide citrique en poids du poids total de la composition.

**8.** Additif pour litière ou litière pour animaux, de préférence pour chats, comprenant la composition selon l'une quelconque des revendications précédentes.

**9.** Utilisation de la composition selon l'une quelconque des revendications 1 à 7 pour la préparation de litière pour animaux, de préférence de litière pour chats et/ou comme engrais.

Figure 1

Figure 2

**EP 4 595 743 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015250133 A1
- US 2019373847 A1